# EUROPÄISCHE PATENTSCHRIFT

(11) **EP 2 587 772 B1**
(45) Veröffentlichungstag und Bekanntmachung des Hinweises auf die Patenterteilung: **31.08.2016**
(21) Anmeldenummer: 11186462.5
(22) Anmeldetag: 25.10.2011
(51) Int. Cl.: H04L 29/12, H04L 29/08

(54) **VERFAHREN ZUM HERSTELLEN EINER KOMMUNIKATIVEN VERBINDUNG ZWISCHEN EINEM PROGRAMMIERGERÄT UND EINEM AUTOMATISIERUNGSTECHNISCHEN FELDGERÄT**
METHOD FOR PRODUCING A COMMUNICATION CONNECTION BETWEEN A PROGRAMMING DEVICE AND AN AUTOMATION TECHNOLOGY FIELD DEVICE
PROCÉDÉ DE FABRICATION D'UNE LIAISON COMMUNICATIVE ENTRE UN APPAREIL DE PROGRAMMATION ET UN APPAREIL DE TERRAIN TECHNIQUE D'AUTOMATISATION

(43) Veröffentlichungstag der Anmeldung: 01.05.2013
(73) Patentinhaber: Siemens Aktiengesellschaft, 80333 München (DE)
(72) Erfinder: Rebbereh, Carsten, 90768 Fürth (DE)

(56) Entgegenhaltungen:
- EP-A2- 0 998 100
- WO-A1-00/27094
- US-A1- 2008 059 611
- ANONYMOUS: "Handbuch WAGO-I/O-SYSTEM 750, version 1.2.0 - Kapitel 8 "In Betrieb nehmen"", WAGO Kontakttechnik GmbH & Co. KG , 16. September 2011 (2011-09-16), Seiten 1-11,94-110, XP002672682, Gefunden im Internet: URL:http://www.wago.com/wagoweb/documentat ion/750/ger_manu/coupler_controller/m07500 871_00000000_0de.pdf [gefunden am 2012-03-30]
- Anonymous: "White Paper: Using Dynamic Host Configuration Protocol (DHCP) to Simplify Network IP Addressing", N-TRON , 18. Januar 2011 (2011-01-18), Seiten 1-6, XP055023367, Gefunden im Internet: URL:http://www.n-tron.com/pdf/dhcp_white_p aper.pdf [gefunden am 2012-03-29]
- NOBUO OKABE ET AL: "Secure Plug and Play Architecture for Field Devices", 5TH IEEE INTERNATIONAL CONFERENCE ON INDUSTRIAL INFORMATICS, 2007, 1. Juli 2007 (2007-07-01), Seiten 873-878, XP031161902, IEEE, PI ISBN: 978-1-4244-0850-4
- ANONYMOUS: 'UGW//maxi Gateway - Handbuch', [Online] 18 August 2011, Seiten 1 - 50, XP055141725 Gefunden im Internet: <URL:http://www.mbs-software.de/uploads/med ia/MBS_DE_UGWmaxiBedienerhandbuch_05.pdf> [gefunden am 2014-09-22]
- ABOBA B: "The Mini-DHCP server", INTERNET CITATION, 4 October 2000 (2000-10-04), XP002168115, Retrieved from the Internet: URL:http://www.alternic.org/drafts/drafts- a-b/draft-aboba-dhc-mini-02.txt [retrieved on 2001-05-23]

## Beschreibung

Die Erfindung betrifft ein Verfahren zum Herstellen einer kommunikativen Verbindung zwischen einem Programmiergerät und einem automatisierungstechnischen Feldgerät und die in diesem Zusammenhang notwendigen Konfigurationen, also speziell ein Verfahren zur automatischen Konfiguration von Verbindungen von einem Programmiergerät zu einem oder mehreren Feldgeräten über Ethernetschnittstellen

Der Begriff automatisierungstechnisches Feldgerät bezeichnet allgemein ein Automatisierungsgerät und speziell ein solches Automatisierungsgerät, das im jeweiligen technischen Prozess, also z.B. benachbart zu gesteuerten und/oder überwachten Aggregaten und dergleichen angeordnet ist und zur Steuerung, Regelung und/oder Überwachung der technologischer Prozesse eingesetzt wird oder einsetzbar ist, wobei über geeignete technische Einrichtungen, wie z.B. Sensoren oder Aktoren, Energie aufgewandt oder gewandelt wird.

Solche Geräte und auch damit kommunikativ verbindbare Programmiergeräte sind an sich bekannt. Eine kommunikative Verbindung eines Programmiergeräts mit zumindest einem automatisierungstechnischen Feldgerät ist z.B. bei einer Inbetriebnahme des jeweiligen Feldgeräts, also z.B. zur Parametrierung und dergleichen, oder zur Diagnose des Feldgeräts notwendig.

Ungünstig sind in diesem Zusammenhang die Maßnahmen, die erforderlich sind, um ein Feldgerät von einem Programmiergerät, also z.B. einem sogenannten Laptop-Computer oder dergleichen, aus anzusprechen, wenn die Verbindung über eine Standard-Ethernetschnittstelle des Programmiergeräts hergestellt wird. Bisher war in diesem Zusammenhang oftmals erforderlich, dass der Benutzer des Programmiergeräts Kenntnis von Netzwerkadressen oder sonstigen Kennungen des automatisierungstechnischen Feldgeräts hatte und das Programmiergerät mit solchen Daten zur Aufnahme der kommunikativen Verbindung geeignet parametrieren konnte. Dies erfordert Fachwissen und ist zudem fehleranfällig.

Eine Aufgabe der vorliegenden Erfindung besteht entsprechend darin, ein Verfahren anzugeben, mit dem eine solche Verbindung hergestellt wird, ohne dass der Anwender sich mit Netzwerkadressen, Schnittstellenparametern und dergleichen befassen muss oder gar entsprechende Werte einzustellen hat. Bei einer besonderen Ausführungsform soll eine Lösung erreicht werden, wie sie unter dem Schlagwort Plug&Play propagiert wird, hier also eine Lösung, bei der der Anwender lediglich den Anschluss des Programmiergeräts an das automatisierungstechnische Feldgerät oder ein Netzwerk mit zumindest einem automatisierungstechnischen Feldgerät herstellen muss und nach dem Verfahren sodann ohne die Notwendigkeit eines Eingriffs des Anwenders die kommunikative Verbindung des Programmiergeräts mit zumindest einem automatisierungstechnischen Feldgerät automatisch hergestellt wird.

Bekannt ist eine oben bereits skizzierte manuelle Konfiguration des Programmiergeräts und des jeweiligen Feldgeräts, so dass ein Ansprechen des Feldgeräts möglich ist. Üblicherweise ist bei einer solchen Herstellung der kommunikativen Verbindung allerdings kein Ansprechen des jeweiligen Feldgeräts oder der jeweiligen Feldgeräte über Namen oder ähnliche Kennungen möglich. Andererseits kommt auch der Einsatz eines dedizierten sogenannten DHCP-Servers und, falls ein Ansprechen über Namen gewünscht wird, der Einsatz eines zusätzlichen DNS-Servers, in Betracht. Ein DHCP-Server ermöglicht bekanntlich eine automatische Einbindung eines weiteren Teilnehmers in ein bestehendes Netzwerk ohne dessen manuelle Konfiguration, indem der DHCP-Server dem jeweiligen Teilnehmer (Client) eine geeignete Netzwerkkonfiguration zuweist. Für den neu hinzukommenden Teilnehmer muss im Normalfall lediglich der automatische Bezug einer Netzwerkadresse eingestellt sein. Beim Start des Teilnehmers oder bei dessen Anschluss kann dieser alle relevanten Netzwerkkonfigurationen, nämlich insbesondere seine eigene zukünftige Netzwerkadresse, eine Netzmaske, ein Gateway, usw., von dem DHCP-Server beziehen.

Sowohl bei der manuellen Konfiguration wie auch beim Einsatz eines dedizierten DHCP-Servers ist der Aufwand zum Herstellen der kommunikativen Verbindung relativ hoch und der Anwender muss Netzwerkadressen identifizieren oder gar selbst festlegen. Der Weg bis zum erfolgreichen Verbindungsaufbau ist relativ lang.

XP002672682 offenbart einen programmierbaren Feldbuscontroller, der seine IP Addresse von einen im SPS-Programm (PC mit Linux oder Windows) befindlichen BootP-Server zugewiesen bekommt.

Ausgehend von dieser Problematik wird die eingangs skizzierte Aufgabe erfindungsgemäß mit einem Verfahren mit den Merkmalen des Anspruchs 1 gelöst. Dazu sind bei einem Verfahren zum Herstellen einer kommunikativen Verbindung eines Programmiergeräts mit zumindest einem automatisierungstechnischen Feldgerät folgende Merkmale und Verfahrensschritte vorgesehen: Das oder jedes Feldgerät umfasst einen aktivierbaren DHCP-Server. Das Programmiergerät ist für einen automatischen Bezug einer Netzwerkadresse bei einem DHCP-Server konfiguriert. Das Programmiergerät bezieht bei einem Anschluss an ein Feldgerät mit einem aktivierbaren DHCP-Server oder ein Netzwerk mit zumindest einem Feldgerät mit einem aktivierbaren DHCP-Server bei dem DHCP-Server eine Netzwerkadresse. Unter dieser Netzwerkadresse kann das Programmiergerät Kommunikationsteilnehmer entweder in einem minimalen, nur das Programmiergerät und ein automatisierungstechnisches Feldgerät umfassenden Kommunikationsnetzwerk oder einem Kommunikationsnetzwerk mit zumindest einem automatisierungstechnischen Feldgerät und eventuell weiteren automatisierungstechnischen Feldgeräten oder sonstigen Geräten werden.

Der Vorteil der Erfindung besteht darin, dass das Feldgerät, zu dem die kommunikative Verbindung aufgebaut werden soll, einen aktivierbaren DHCP-Server umfasst. Ein dedizierter DHCP-Server ist damit nicht mehr erforderlich und zudem ist mit dem vom Feldgerät selbst umfassten aktivierbaren DHCP-Server auch in minimalen Kommunikationsnetzwerken stets ein DHCP-Server verfügbar. Indem das Programmiergerät für einen automatischen Bezug einer Netzwerkadresse bei einem DHCP-Server konfiguriert ist, kann das Programmiergerät bei einem Anschluss an ein solches Feldgerät bei dessen aktivierbarem DHCP-Server eine Netzwerkadresse beziehen und unter dieser zukünftig als Kommunikationsteilnehmer das Feldgerät ansprechen, um dort Parametrierungen und dergleichen vorzunehmen oder eine Diagnose zu veranlassen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn das Feldgerät zusätzlich einen aktivierbaren DNS-Server umfasst, besteht die Möglichkeit, dass auch Teilnehmernamen erkannt und in Form der jeweils zugehörigen Netzwerkadresse aufgelöst werden können.

Bei einer Mehrzahl kommunikativ verbundener Feldgeräte ist vorgesehen, dass nur in einem Feldgerät dessen DHCP-Server bzw. dessen DHCP-Server und dessen DNS-Server aktiviert und in allen anderen Feldgeräten deren DHCP-Server bzw. deren DHCP-Server und DNS-Server deaktiviert sind. Auf diese Weise ist eine Eindeutigkeit der nach dem Dynamic-Host-CommunicationProtocol übermittelten Informationen gewährleistet, so dass auch bei einer Mehrzahl kommunikativ verbundener Feldgeräte dem Programmiergerät von dem genau einen aktivierten DHCP-Server eine Netzwerkadresse zugewiesen wird.

Bei einer besonderen Ausführungsform des Verfahrens erfolgt die Zuweisung einer Netzwerkadresse an das Programmiergerät in folgenden Schritten: Wenn ein Kommunikationsnetzwerk zumindest in Form eines Anschlusses des Programmiergeräts an das Feldgerät besteht, sendet das Feldgerät eine im Folgenden als Anfrage bezeichnete DHCP-Anfrage, insbesondere als Broadcast, in das Kommunikationsnetzwerk und fordert damit eine Netzwerkadresse an. Bei Erhalt einer Antwort auf die Anfrage übernimmt das Feldgerät eine in der Antwort enthaltene Netzwerkadresse als eigene Netzwerkadresse und deaktiviert seinen DHCP-Server. In einer solchen Situation ist in dem Kommunikationsnetzwerk zumindest noch ein weiteres Gerät mit einem DHCP-Server oder einer vergleichbaren Funktionalität vorhanden. Wenn das Feldgerät dagegen innerhalb einer vorgegebenen Zeitspanne keine Antwort auf die Anfrage erhält, weist sich dieses selbst eine Netzwerkadresse zu und aktiviert seinen DHCP-Server. Dann ist sichergestellt, dass eine Konstellation vorliegt, bei der in dem Kommunikationsnetzwerk kein weiteres Feldgerät mit aktiviertem DHCP-Server oder ein sonstiges Gerät mit einem DHCP-Server oder einer vergleichbaren Funktionalität existiert. Das Programmiergerät kann jetzt von genau einem im Kommunikationsnetzwerk aktiven DHCP-Server eine Netzwerkadresse beziehen und ist dann als zugelassener Teilnehmer an das Kommunikationsnetzwerk und damit das mindestens eine automatisierungstechnische Feldgerät angeschlossen.

Bei einer besonderen Ausführungsform des Verfahrens ist vorgesehen, dass im Zusammenhang mit der Aktivierung des DHCP-Servers das jeweilige Feldgerät auch seinen DNS-Server aktiviert, sowie eine eindeutige Kennung, zum Beispiel eine Seriennummer oder dergleichen, als eigenen Teilnehmernamen in eine für den DNS-Server verwendbare DNS-Liste einträgt. Auf diese Weise ist das automatisierungstechnische Feldgerät auch unter dem in der DNS-Liste abgelegten Teilnehmernamen ansprechbar, indem das Programmiergerät mit seiner ihm zugewiesenen Netzwerkadresse an den DNS-Server oder den einzigen aktivierten DNS-Server eine im Folgenden als Anfrage bezeichnete DNS-Anfrage sendet, woraufhin der DNS-Server die Netzwerkadresse des durch den jeweiligen Teilnehmernamen bezeichneten automatisierungstechnischen Feldgeräts zurückliefert.

Bei einer weiteren besonderen Ausführungsform des Verfahrens ist vorgesehen, dass das Feldgerät mit aktiviertem DHCP-Server und aktiviertem DNS-Server bei zum Kommunikationsnetzwerk hinzukommenden Feldgeräten eine eindeutige Kennung abfragt und diese als Teilnehmernamen des hinzukommenden Feldgeräts in die DNS-Liste des eigenen aktivierten DNS-Servers einträgt. Eine solche Abfrage kann z.B. über einen FTP-Zugriff auf einen vorgegebenen oder vorgebbaren Speicherort im Feldgerät erfolgen. Auf diese Weise wird die DNS-Liste des aktivierten DNS-Servers fortlaufend aktiviert, falls weitere Feldgeräte zu dem Kommunikationsnetzwerk hinzukommen, so dass auch solche hinzukommenden Feldgeräte von dem Programmiergerät angesprochen werden können, ohne dass dafür Eingriffe des Benutzers beim Programmiergerät oder im Kommunikationsnetzwerk notwendig sind.

Bei einer alternativen Ausführungsform des Verfahrens ist vorgesehen, dass in dem oder jedem Feldgerät im Kommunikationsnetzwerk ein DNS-Server aktiv ist, dass der DNS-Server desjenigen Feldgeräts mit aktiviertem DHCP-Server als primärer DNS-Server und jeder andere DNS-Server als sekundärer DNS-Server fungiert und dass jeder sekundäre DNS-Server in einer eigenen DNS-Liste zumindest den Teilnehmernamen des "eignen" Feldgeräts verwaltet. Das Feldgerät mit dem aktiven DHCP-Server und dem primären DNS-Server kann dann nach Vergabe einer Netzwerkadresse an ein neu hinzukommendes Feldgerät eine im Folgenden ebenfalls nur kurz als Anfrage bezeichnete sogenannte Reverse-LookUp-Anfrage an das neu hinzukommende Feldgerät senden und bei dessen sekundärem DNS-Server dessen Teilnehmernamen abfragen und danach in die eigene DNS-Liste eintragen. Der in jedem Feldgerät vorgesehene DNS-Server fungiert damit wie der oben erwähnte Speicherort, an dem alternativ eine als Teilnehmername verwendbare Kennung abgefragt werden kann. Der Vorteil der Verwendung eines DNS-Servers oder eines DNS-Protokolls liegt darin, dass die Verwendung des DNS-Protokolls ohnehin erforderlich ist, wenn in dem Netzwerk die Auflösung von Teilnehmernamen vorgesehen ist. Eine Unterstützung zusätzlicher Protokolle, wie z.B. FTP, ist damit nicht erforderlich. Sobald ein bei einem sekundären DNS-Server abgefragter Teilnehmername in die DNS-Liste des primären DNS-Servers eingetragen ist, ist der Teilnehmername des neu hinzukommenden Feldgeräts in an sich bekannter Art und Weise auflösbar und eine mit diesem Teilnehmernamen an den primären DNS-Server gerichtete Anfrage liefert die Netzwerkadresse des durch den Teilnehmernamen bezeichneten Feldgeräts zurück, so dass dieses von dem Programmiergerät angesprochen werden kann.

Für den Fall einer Anfrage eines Teilnehmernamens bei einem hinzukommenden Feldgerät ist bei einer Ausführungsform des Verfahrens vorgesehen, dass durch geeignete Maßnahmen sichergestellt ist, dass diese Anfrage immer zuerst von dem sekundären DNS-Server des hinzukommenden Feldgeräts beantwortet wird und nicht etwa im Kommunikationsnetzwerk an den primären DNS-Server gelangt, der zu diesem Zeitpunkt naturgemäß noch keine Information zu diesem Teilnehmernamen haben kann.

Bei allen bisher beschriebenen Ausführungsformen des Verfahrens kann bei einer Ergänzung des Verfahrens vorgesehen sein, dass das Feldgerät mit aktiviertem DHCP-Server und aktiviertem DNS-Server das Programmiergerät an oder bei einem Fehlschlag einer Abfrage einer Kennung bei dem Programmiergerät, z.B. mit FTP oder dergleichen, oder einem Fehlschlag einer DNS-Anfrage bei dem Programmiergerät erkennt.

Der Vorteil der Erfindung und ihrer Ausgestaltungen besteht damit insbesondere darin, dass das Verfahren zum Herstellen der kommunikativen Verbindung sowohl bei Punkt-zu-Punkt-Verbindungen zwischen einem Programmiergerät und einem automatisierungstechnischen Feldgerät funktioniert wie auch bei Konstellationen, bei denen mehrere Geräte über sogenannte Hubs oder Switches verbunden sind. Das Verfahren ermittelt die notwendigen Netzwerkadressen, also die sogenannten IP-Adressen, und macht diese den anderen Teilnehmern des Verfahrens, also entweder einem automatisierungstechnischen Feldgerät oder automatisierungstechnischen Feldgeräten einerseits und dem Programmiergerät andererseits, bekannt. Diese Informationsvermittlung kann auch Namen oder sonstige Kennzeichen der Teilnehmer umfassen, wobei Letzteres nicht verpflichtend ist.

Die oben genannte Aufgabe wird auch mit einem Automatisierungsgerät oder automatisierungstechnischen Feldgerät gelöst, das zur Ausführung des Verfahrens wie hier und nachfolgend beschrieben und ggf. seiner Ausgestaltungen bestimmt und eingerichtet ist und dazu Mittel zur Durchführung des Verfahrens umfasst. Als derartige Mittel sind ein Speicher, in den ein Computerprogramm geladen oder ladbar ist, sowie eine Verarbeitungseinheit in Form von oder nach Art eines Mikroprozessors zur Ausführung des Computerprogramms und zumindest ein DHCP-Server oder ein DHCP-Server sowie ein DNS-Server vorgesehen. Das Computerprogramm umfasst Computerprogrammanweisungen zur Ausführung aller Verfahrensschritte des Verfahrens wie hier und nachfolgend beschrieben und ggf. seiner Ausgestaltungen, wenn das Computerprogramm durch die Verarbeitungseinheit ausgeführt wird. Die Erfindung ist also bevorzugt in Software implementiert. Die Erfindung ist damit auch ein Computerprogramm mit durch einen Computer ausführbaren Programmcodeanweisungen sowie ein Speichermedium mit einem derartigen Computerprogramm und schließlich auch ein Automatisierungsgerät oder automatisierungstechnisches Feldgerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein automatisierungstechnisches Feldgerät mit einem daran angeschlossenen und kommunikativ verbindbaren oder kommunikativ verbundenen Programmiergerät,
- FIG 2: eine schematisch vereinfachte Darstellung eines Verfahrensablaufs beim Herstellen einer kommunikativen Verbindung eines Programmiergeräts mit einem automatisierungstechnischen Feldge-. rät,
- FIG 3: eine schematisch vereinfachte Darstellung eines Verfahrensablaufs beim Herstellen einer kommunikativen Verbindung eines weiteren Feldgeräts mit einem bereits mit einem Programmiergerät kommunikativ verbundenen automatisierungstechnischen Feldgerät sowie
- FIG 4 und 5: schematisch vereinfachte Darstellungen eines Flussdiagramms einer Implementation des Verfahrens in Form eines Computerprogramms.

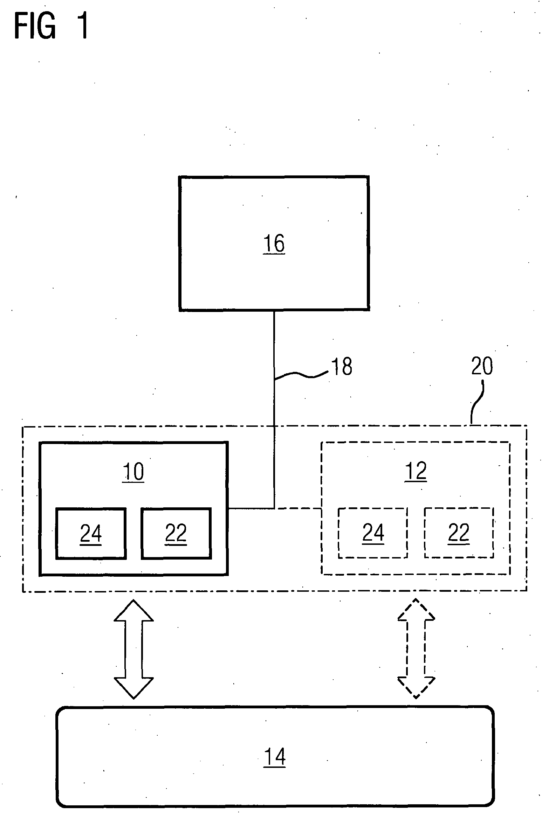

FIG 1 zeigt schematisch vereinfacht ein automatisierungstechnisches Feldgerät 10, das auch allgemein als Automatisierungsgerät aufgefasst werden kann, das in an sich bekannter Art und Weise mit anderen Feldgeräten 12 oder Automatisierungsgeräten kommunikativ verbindbar ist und einzeln oder zusammen mit anderen Feldgeräten 12 und dergleichen einen nicht näher dargestellten technischen Prozess 14 steuert und/oder überwacht. Zur Parametrierung, Diagnose, usw. des oder jedes Feldgeräts 10, 12 ist ein Programmiergerät 16 vorgesehen. Um ein Feldgerät 10, 12 von einem Programmiergerät 16, z.B. einem Laptop-Computer oder dergleichen, aus ansprechen zu können, ist eine physikalische Verbindung 18 auf leitungsgebundenem oder leitungslosem Weg zwischen dem Programmiergerät 16 und dem jeweiligen Feldgerät 10 oder einem Kommunikationsnetzwerk 20, in dem alle untereinander kommunikativ verbundenen Geräte 10-12 zumindest organisatorisch zusammengefasst sind, erforderlich.

Über die physikalische Verbindung 18 vom Programmiergerät 16 zu dem oder jedem Feldgerät 10 wird nach einem für die jeweilige Verbindung 18 vorgesehenen Protokoll eine Übertragung von Daten vom Programmiergerät 16 zum Feldgerät 10 und vom Feldgerät 10 zum Programmiergerät 16 abgewickelt. Dazu ist auf Basis der jeweiligen physikalischen Verbindung 18 auch eine kommunikative Verbindung zwischen den beteiligten Geräten 10, 16 erforderlich und eine solche kommunikative Verbindung erfordert zumindest, dass jedem beteiligten Gerät 10,16 die Netzwerkadresse des jeweils anderen Geräts 10, 16 bekannt ist.

Nach dem hier vorgeschlagenen Ansatz ist dafür vorgesehen, dass das oder jedes Feldgerät 10, 12 einen aktivierbaren DHCP-Server 22 umfasst. Das Programmiergerät 16 ist für einen automatischen Bezug einer Netzwerkadresse bei einem DHCP-Server 22 konfiguriert. Bei einem Anschluss des Programmiergeräts 16 an ein Feldgerät 10 mit einem aktivierbaren DHCP-Server 22 oder ein Netzwerk 20 mit zumindest einem Feldgerät 10, 12 mit einem aktivierbaren DHCP-Server 22 bezieht das Programmiergerät 16 bei dem DHCP-Server 22 eine Netzwerkadresse und zwar nach einem an sich bekannten und im Rahmen des DHC-Protokolls festgelegten Verfahrens.

Optional kann vorgesehen sein, dass das Feldgerät 10 einen DNS-Server 24 umfasst und der DNS-Server 24 die von diesen Diensten umfassten Funktionalitäten, also speziell die Beantwortung von Anfragen zur Namensauflösung, bereitstellt.

Bei einer Mehrzahl kommunikativ verbundener Feldgeräte 10, 12 ist vorgesehen, dass in nur einem der Feldgeräte 10 dessen DHCP-Server 22 aktiviert und in allen anderen Feldgeräten 12 deren DHCP-Server 22 deaktiviert sind. Gleiches gilt für etwaige DNS-Server 24, wenn die Feldgeräte 10, 12 einen aktivierbaren DNS-Server 24 umfassen. Entsprechend ist dann bei einer Mehrzahl kommunikativ verbundener Feldgeräte 10, 12 nur in einem Feldgerät 10 dessen DHCP-Server 22 und dessen DNS-Server 24 aktiviert und in allen anderen Feldgeräten 12 sind die dortigen DHCP-Server 22 und DNS-Server 24 deaktiviert.

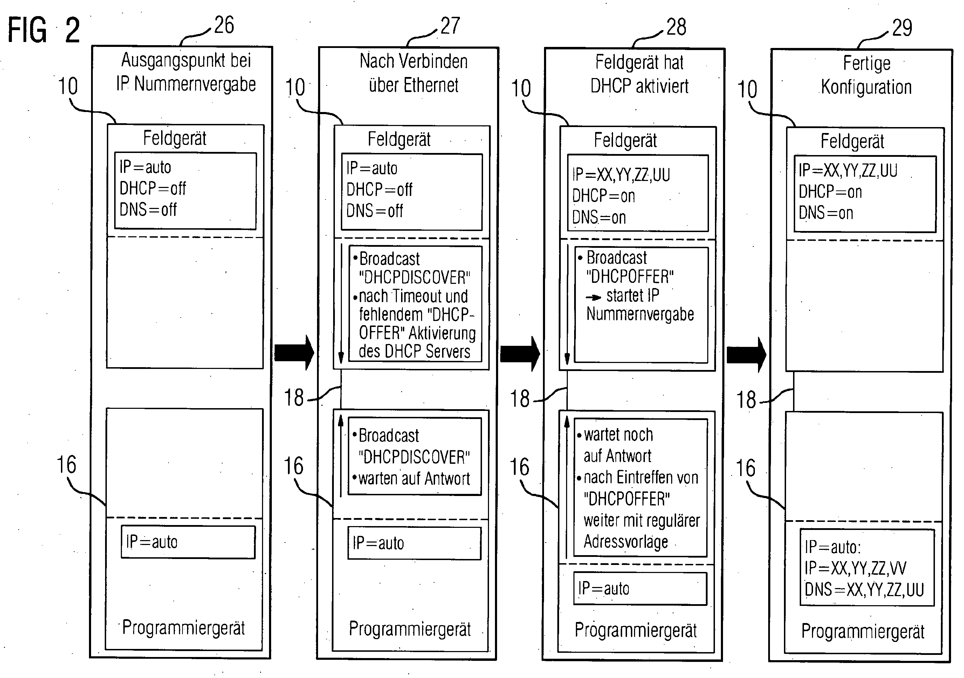

FIG 2 erläutert nun das hier vorgeschlagene Verfahren mit weiteren Details. Die Darstellung in FIG 2 ist gegenüber der Darstellung in FIG 1 hinsichtlich der beteiligten Geräte 10, 12, 16 nochmals weiter schematisch vereinfacht. Gezeigt werden ein erster Zustand 26, ein zweiter Zustand 27, ein dritter Zustand 28 und ein vierter Zustand 29. Der erste Zustand 26 stellt den Ausgangspunkt bei der IP-Nummernvergabe, also bei der Vergabe einer Netzwerkadresse, dar. Der zweite Zustand 27 stellt die Konfiguration dar, bei dem das Programmiergerät 16 über eine physikalische Verbindung 18, also insbesondere über Ethernet, an das Feldgerät 10 angeschlossen ist. Der dritte Zustand 28 stellt die Situation dar, bei der das Feldgerät 10 seinen DHCP-Server 22 (FIG 1) aktiviert hat. Der vierte Zustand 29 stellt schließlich die fertige Konfiguration mit der durch das Programmiergerät 16 bezogenen Netzwerkadresse dar.

Für den ersten Zustand 26 ist gezeigt, dass sowohl das Feldgerät 10 wie auch das Programmiergerät 16 für einen automatischen Bezug einer Netzwerkadresse konfiguriert sind ("IP = auto"). Der DHCP-Server 22 des Feldgeräts 10 ist deaktiviert ("DHCP = off"). Ein etwaiger DNS-Server 24 (FIG 1) des Feldgeräts 10 ist gleichfalls deaktiviert ("DNS = off").

Sobald das Programmiergerät 16 an das Feldgerät 10 angeschlossen ist (zweiter Zustand 27), besteht ein minimales Kommunikationsnetzwerk 20 mit zumindest zwei Geräten/Teilnehmern 10, 16. Das Feldgerät 10 sendet durch seinen DHCP-Server 22 eine DHCP-Anfrage ins Netz 20 (DHCPDISCOVER; gesendet als Broadcast) und fordert eine Netzwerkadresse, also eine IP-Nummer, an. Dies ist im Übrigen Teil eines an sich bekannten Verfahrens zum automatischen Bezug von Netzwerkadressen für entsprechend konfigurierte Teilnehmer.

Wenn nach der Anfrage zum Bezug einer Netzwerkadresse innerhalb einer vorgegebenen Zeitspanne keine Antwort auf die Anfrage beim Feldgerät 10 eintrifft, aktiviert das Feldgerät 10 seinen DHCP-Server 22 ("DHCP = on") und weist sich selbst eine Netzwerkadresse zu, die in der Darstellung symbolisch als "IP = XX.YY.ZZ.UU" angegeben ist (dritter Zustand 28). Bei einer besonderen Ausführungsform des Verfahrens meint das Fehlen einer Antwort innerhalb einer vorgegebenen Zeitspanne das Verstreichen der Zeitspanne und eine fehlende DHCPOFFER-Antwort auf die DHCPDISCOVER-Anfrage.

Genauso wie das Feldgerät 10 ist auch das Programmiergerät 16 zum automatischen Bezug einer Netzwerkadresse konfiguriert und sendet entsprechend zur Anforderung einer Netzwerkadresse eine DHCP-Anfrage (DHCPDISCOVER; gesendet als Broadcast) ins Netz 20 (zweiter Zustand 27). Solange der DHCP-Server 22 des Feldgeräts 10 inaktiv ist, ist im Netz 20 kein Dienst verfügbar, der die DHCP-Anfrage beantworten kann. Das Programmiergerät 16 erhält also zunächst keine Antwort auf seine Anfrage, wartet jedoch weiterhin auf eine solche Antwort (noch zweiter Zustand 27; dritter Zustand 28). Sobald das Feldgerät 10 seinen DHCP-Server 22 aktiviert hat, kann dieser auf die DHCP-Anfrage des Programmiergeräts 16 reagieren, insbesondere mit einer DHCPOFFER-Antwort. Dadurch wird die Vergabe einer Netzwerkadresse an das Programmiergerät 16 nach dem DHC-Protokoll gestartet (dritter Zustand 28).

Schließlich ist dem Programmiergerät 16 eine Netzwerkadresse zugewiesen (vierter Zustand 29), die in der Darstellung symbolisch als "IP = XX.YY.ZZ.VV" angegeben ist. Damit ist das Programmiergerät 16 nicht nur über die Verbindung 18 an das Feldgerät 10 angeschlossen, sondern auch kommunikativ mit dem Feldgerät 10 verbunden, indem unter Verwendung der Netzwerkadressen des Feldgeräts 10 und des Programmiergeräts 16 über die Verbindung 18 nach dem für die kommunikative Verbindung vorgesehenen Protokoll, zum Beispiel dem Internet-Protokoll (IP), Daten austauschbar sind. Aus Sicht des Programmiergeräts 16 wird mit der Netzwerkadresse des Feldgeräts 10 eine Zieladresse und mit der eigenen Netzwerkadresse eine Ursprungsadresse für eine Übermittlung von Daten an das Feldgerät 10 spezifiziert. Bei Daten, die das Feldgerät 10 an das Programmiergerät 16 übermittelt, fungiert die Netzwerkadresse des Feldgeräts 10 als Ursprungsadresse und die Netzwerkadresse des Programmiergeräts 16 als Zieladresse.

Bei der Darstellung in FIG 2, bei der von einem grundsätzlich optionalen DNS-Server 24 im Feldgerät 10 ausgegangen wird, ist für den vierten Zustand 29 noch gezeigt, dass auf Seiten des Programmiergeräts 16 die Netzwerkadresse des Feldgeräts 10 als Adresse zur Abfrage von DNS-Diensten bei dessen DNS-Server 24 hinterlegt wurde.

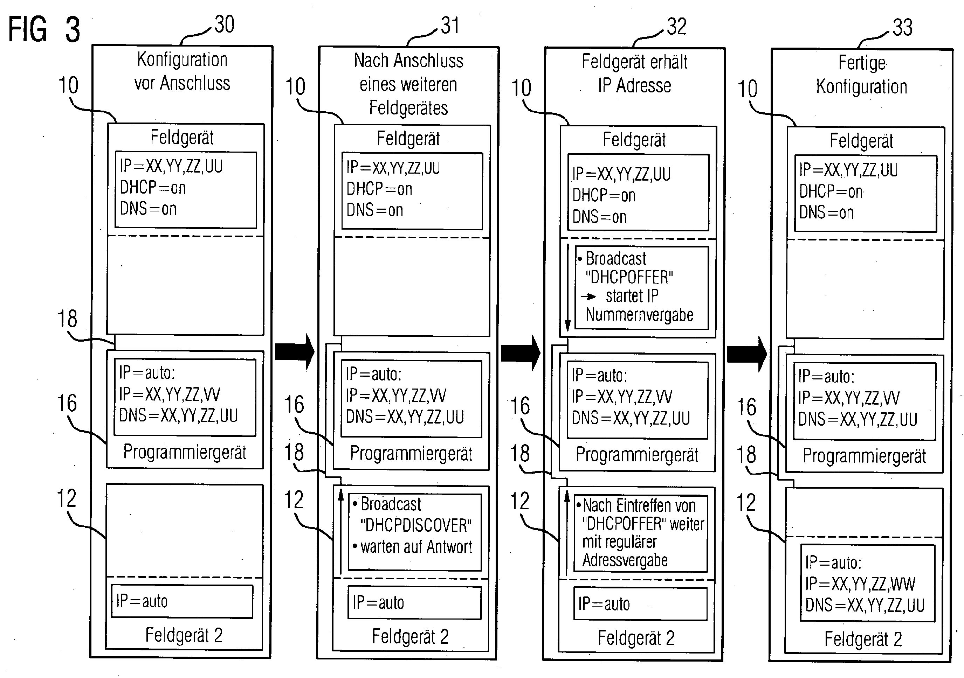

FIG 3 stellt ähnlich wie FIG 2 einen Ablauf eines Verfahrens zum Herstellen einer kommunikativen Verbindung eines weiteren Teilnehmers, hier eines weiteren automatisierungstechnischen Feldgeräts 12, an ein automatisierungstechnisches Feldgerät 10 während eines ersten, zweiten, dritten und vierten Zustands 30-33 dar. Die Besonderheit bei der in FIG 3 gezeigten Situation besteht darin, dass die kommunikative Verbindung eines weiteren Teilnehmers mit zumindest zwei bereits kommunikativ verbundenen Teilnehmern erfolgt, nämlich dem automatisierungstechnischen Feldgerät 10 und dem damit kommunikativ verbundenen Programmiergerät 16, also dem Zustand am Ende des in FIG 2 gezeigten Verfahrensablaufs.

Der erste Zustand 30 ist dadurch gekennzeichnet, dass das weitere automatisierungstechnische Feldgerät 12 für einen automatischen Bezug einer Netzwerkadresse konfiguriert ist ("IP = auto"). Für den zweiten Zustand 31 ist dargestellt, dass das weitere automatisierungstechnische Feldgerät 12 über eine geeignete physikalische Verbindung 18 an das Feldgerät 10 oder das Programmiergerät 16 oder allgemein an das zwischen Feldgerät 10 und Programmiergerät 16 bestehende Kommunikationsnetz 20 angeschlossen ist. Aufgrund seiner Konfiguration für den automatischen Bezug einer Netzwerkadresse sendet das weitere Feldgerät 12 nach Detektion der bestehenden physikalischen Verbindung 18 eine DHCP-Anfrage ins Netz 20 (DHCPDISCOVER; gesendet als Broadcast) und fordert eine Netzwerkadresse, also eine IP-Nummer, an. Aufgrund seines aktivierten DHCP-Servers 22 (siehe FIG 2; dritter Zustand 28) kann das Feldgerät 10 die DHCP-Anfrage des weiteren Feldgeräts 12 beantworten und reagiert auf diese mit einer DHCPOFFER-Antwort. Dadurch wird die Vergabe einer Netzwerkadresse an das weitere Feldgerät 12 nach dem DHC-Protokoll gestartet (dritter Zustand 32).

Schließlich ist dem weiteren Feldgerät 12 eine Netzwerkadresse zugewiesen (vierter Zustand 33), welche in der Darstellung symbolisch als "IP = XX.YY.ZZ.WW" angegeben ist. Damit ist das weitere Feldgerät 12 nicht nur über die Verbindung 18 an das Feldgerät 10 und das Programmiergerät 16 angeschlossen, sondern auch kommunikativ mit dem Feldgerät 10 und dem Programmiergerät 16 verbunden, indem unter Verwendung der Netzwerkadressen der beiden Feldgeräte 10, 12 und des Programmiergeräts 16 über die Verbindung 18 nach dem für die kommunikative Verbindung vorgesehenen Protokoll, zum Beispiel dem Internet-Protokoll (IP), Daten austauschbar sind. Das weitere Feldgerät 12 ist damit unmittelbar auch durch das Programmiergerät 16 für Parametrierungszwecke und dergleichen ansprechbar.

Auch bei der Darstellung in FIG 3, bei der wie bei der in FIG 2 gezeigten Situation von einem grundsätzlich optionalen DNS-Server 24 im Feldgerät 10 ausgegangen wird, ist für den vierten Zustand 33 noch gezeigt, dass auf Seiten des weiteren Feldgeräts 12 die Netzwerkadresse des Feldgeräts 10 als Adresse zur Abfrage von DNS-Diensten bei dessen DNS-Server 24 hinterlegt wurde.

Im Zusammenhang mit dem in FIG 3 dargestellten Verfahrensablauf ist wichtig darauf hinzuweisen, dass die in FIG.3 gezeigten Verhältnisse auch umgekehrt sein können und zwar könnte anstelle des bereits an das Netz 20 angeschlossenen Programmiergeräts 16 ein bereits an das Netz 20 angeschlossenes, weiteres Feldgerät 12 vorhanden sein. Dann gilt die obige Beschreibung für den Anschluss eines weiteren Feldgeräts 12 entsprechend für den Anschluss eines Programmiergeräts 16 an ein Netz 20 mit mindestens zwei Feldgeräten 10, 12.

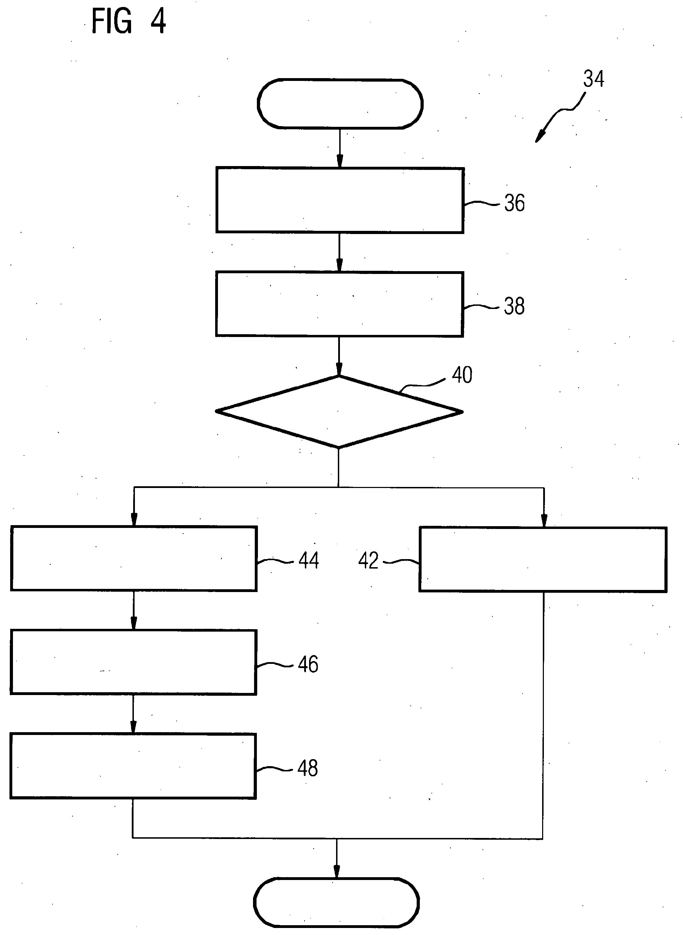

FIG 4 zeigt abschließend und schematisch stark vereinfacht ein Flussdiagramm eines Computerprogramms 34, das zur Realisierung des Verfahrens und ggf. seiner Ausgestaltungen, wie hier beschrieben, durch ein automatisierungstechnisches Feldgerät 10, 12 ausgeführt wird. Dafür umfasst das Feldgerät 10, 12 in an sich bekannter Art und Weise eine Verarbeitungseinheit (nicht dargestellt) nach Art von oder in Form eines Mikroprozessors und einen Speicher (nicht dargestellt), in den das Cömputerprogramm 34 ladbar ist. Im Betrieb des Feldgeräts 10, 12 wird das Computerprogramm 34 durch die Verarbeitungseinheit ausgeführt. Die Beschreibung der Funktionalität des Computerprogramms 34 beschränkt sich auf die im Zusammenhang mit der hier vorgelegten Beschreibung wesentlichen Aspekte. Darüber hinaus kann das Computerprogramm 34 noch weitere Funktionen aufweisen oder mit anderen, ebenfalls in den Speicher des Feldgeräts 10, 12 geladenen Computerprogrammen interagieren.

Ein erster Schritt 36 des Computerprogramms 34 oder zu dessen Implementation vorgesehene Computerprogrammanweisungen bewirkt eine Konfiguration des Feldgeräts 10, 12 für einen automatischen Bezug einer Netzwerkadresse bei einem DHCP-Server 22 und eine zumindest anfängliche Deaktivierung des eigenen DHCP-Servers 22 sowie eines eventuellen DNS-Servers 24. In einem zweiten Schritt 38 sendet das Feldgerät 10, 12 eine DHCP-Anfrage (DHCPDISCOVER) und fordert eine Netzwerkadresse an. In einem dritten Schritt 40 wird überprüft, ob innerhalb einer vorgegebenen oder vorgebbaren Zeitspanne (time-out) eine Antwort auf die DHCP-Anfrage eintrifft. Geht eine solche Antwort (DHCPOFFER) ein, wird das Computerprogramm 34 in einem vierten Schritt 42 fortgesetzt, mit dem nach dem DHC-Protokoll die Vergabe einer Netzwerkadresse an das Feldgerät 10, 12 gestartet wird (der DHCP-Server 22 des Feldgeräts 10, 12 bleibt deaktiviert). Geht keine solche Antwort während der jeweiligen Wartezeit ein, wird das Computerprogramm 34 in einem fünften Schritt 44 fortgesetzt. Hier weist sich das Feldgerät 10, 12 selbst eine Netzwerkadresse zu und in einem sechsten Schritt 46 wird der DHCP-Server 22 und ggf. ein eventuellen DNS-Server 24 des Feldgeräts 10, 12 aktiviert. Ein abschließender siebenter Schritt 48 ist vorgesehen, damit das Feldgerät 10, 12 oder dessen jetzt aktivierter DHCP-Server 22 auf DHCP-Anfragen anderer Geräte regiert und ggf. die Vergabe einer Netzwerkadresse einleitet (DHCPOFFER).

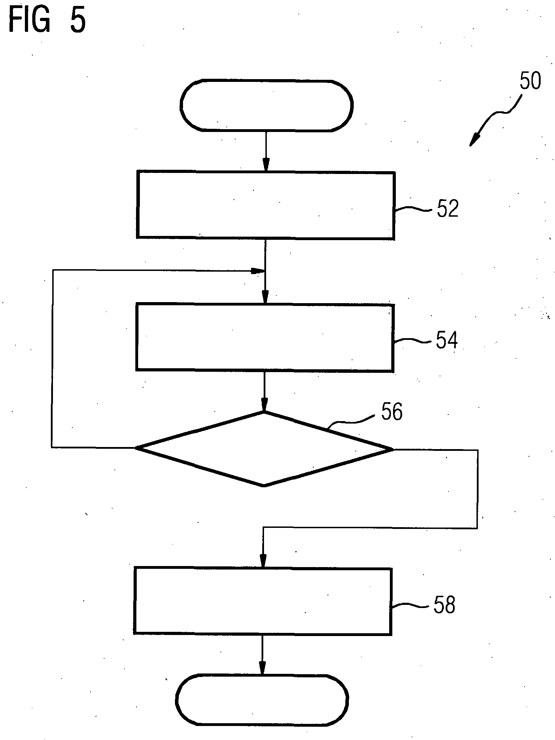

FIG 5 zeigt auf der Basis der Beschreibung anhand der Darstellung in FIG 4 die grundsätzliche Funktionalität eines entsprechenden Computerprogramms 50 für ein Programmiergerät 16, das in dessen Speicher (nicht dargestellt) ladbar sowie durch dessen Verarbeitungseinheit (nicht dargestellt) ausführbar ist und sich von dem Computerprogramm 34 für ein Feldgerät 10, 12 im Wesentlichen dadurch unterscheidet, dass das Programmiergerät 16 keinen DHCP-Server 22 umfasst und ein solcher dort entsprechend auch nicht aktiviert werden kann.

Auch bei dem Computerprogramm 50 für das Programmiergerät 16 wird in einem ersten Schritt 52 sicher gestellt, dass das Programmiergerät 16 für einen automatischen Bezug einer Netzwerkadresse bei einem DHCP-Server 22 konfiguriert ist. In einem zweiten Schritt 54 sendet das Programmiergerät 16 eine DHCP-Anfrage (DHCPDISCOVER) und fordert eine Netzwerkadresse an. In einem dritten Schritt 56 wird überprüft, ob eine Antwort auf die DHCP-Anfrage eintrifft. Geht eine solche Antwort (DHCPOFFER) ein, wird das Computerprogramm 50 in einem vierten Schritt 58 fortgesetzt, mit dem nach dem DHC-Protokoll die Vergabe einer Netzwerkadresse an das Programmiergerät 16 gestartet wird. Solange keine solche Antwort eingegangen ist, wird das Computerprogramm 50 durch die fortgesetzte Ausführung des dritten Schritts 56 (ggf. des zweiten Schrittes 54 und des dritten Schrittes 56) fortgesetzt, um auf die Verfügbarkeit eines DHCP-Servers 22 und dessen Antwort zu warten.

Einzelne im Vordergrund stehende Aspekte der hier eingereichten Beschreibung lassen sich damit kurz wie folgt zusammenfassen: Es wird ein Verfahren zum Herstellen einer kommunikativen Verbindung eines Programmiergeräts 16 mit einem automatisierungstechnischen Feldgerät 10, 12 angegeben, wobei das Feldgerät 10, 12 einen aktivierbaren DHCP-Server 22 umfasst, wobei das Programmiergerät 16 für einen automatischen Bezug einer Netzwerkadresse bei einem DHCP-Server 22 konfiguriert ist und wobei das Programmiergerät 16 bei einem Anschluss an ein Feldgerät 10, 12 mit einem aktivierten DHCP-Server 22 oder ein Netzwerk mit zumindest einem Feldgerät 10, 12 mit einem aktivierten DHCP-Server 22 bei dem DHCP-Server 22 eine Netzwerkadresse bezieht.

## Patentansprüche

1. Verfahren zum Herstellen einer kommunikativen Verbindung eines Programmiergeräts (16) mit einem automatisierungstechnischen Feldgerät (10,12), das in einem technischen Prozess benachbart zu gesteuerten und/oder überwachten Aggregaten angeordnet ist und zur Steuerung, Regelung und/oder Überwachung des technischen Prozesses eingesetzt wird,
**dadurch gekennzeichnet,**
**dass** das Feldgerät (10,12) einen aktivierbaren DHCP-Server (22) umfasst,
**dass** das Programmiergerät (16) für einen automatischen Bezug einer Netzwerkadresse bei einem DHCP-Server (22) konfiguriert ist und
**dass** das Programmiergerät (16) bei einem Anschluss an ein Feldgerät (10,12) mit einem aktivierbaren DHCP-Server (22) oder ein Netzwerk mit zumindest einem Feldgerät (10,12) mit einem aktivierbaren DHCP-Server (22) bei dem DHCP-Server (22) eine Netzwerkadresse bezieht.

2. Verfahren nach Anspruch 1, wobei das Feldgerät (10,12) einen DNS-Server (24) umfasst.

3. Verfahren nach einem der vorangehenden Ansprüche, wobei bei einer Mehrzahl kommunikativ verbundener Feldgeräte (10, 12) nur in einem Feldgerät (10,12) dessen DHCP-Server aktiviert und in allen anderen Feldgeräten deren DHCP-Server deaktiviert sind.

4. Verfahren nach einem der vorangehenden Ansprüche, wobei ein Kommunikationsnetzwerk (20) zumindest in Form eines Anschlusses des Programmiergeräts (16) an das Feldgerät (10, 12) besteht,
wobei das Feldgerät (10,12) vor einer Aktivierung seines DHCP-Servers eine DHCP-Anfrage in das Kommunikationsnetzwerk sendet und eine Netzwerkadresse anfordert,
wobei das Feldgerät (10,12) bei Erhalt einer Antwort auf die DHCP-Anfrage eine in der Antwort enthaltene Netzwerkadresse als eigene Netzwerkadresse übernimmt und seinen DHCP-Server (22) deaktiviert belässt,
wobei das Feldgerät (10,12), wenn innerhalb einer vorgegebenen Zeitspanne keine Antwort auf die DHCP-Anfrage eintrifft, sich selbst eine Netzwerkadresse zuweist sowie seinen DHCP-Server (22) aktiviert und
wobei das Programmiergerät (16) von genau einem im Kommunikationsnetzwerk (20) aktiven DHCP-Server (22) eine Netzwerkadresse bezieht.

5. Verfahren nach Anspruch 2 und Anspruch 4, wobei im Zusammenhang mit der Aktivierung des DHCP-Servers (22) das jeweilige Feldgerät (10,12) auch seinen DNS-Server (24) aktiviert sowie eine eindeutige Kennung als eigenen Teilnehmernamen in eine für den DNS-Server (24) verwendbare DNS-Liste einträgt.

6. Verfahren nach Anspruch 5, wobei das Feldgerät (10,12) mit aktiviertem DHCP-Server (22) und aktiviertem DNS-Server (24) bei zum Kommunikationsnetzwerk (20) hinzukommenden Feldgeräten (10,12) deren eindeutige Kennung abfragt und diese als Teilnehmername des hinzukommenden Feldgeräts (10,12) in die DNS-Liste einträgt.

7. Verfahren nach Anspruch 2 und Anspruch 4,
wobei in dem oder jedem Feldgerät (10,12) im Kommunikationsnetzwerk (20) ein DNS-Server (24) aktiv ist,
wobei der DNS-Server (24) desjenigen Feldgeräts (10,12) mit aktiviertem DHCP-Server (22) als primärer DNS-Server (24) und jeder andere DNS-Server (24) als sekundärer DNS-Server (24) fungiert,
wobei jeder sekundäre DNS-Server (24) in einer eigenen DNS-Liste zumindest den Teilnehmernamen des jeweiligen Feldgeräts (10,12) verwaltet,
wobei das Feldgerät (10,12) mit dem aktiven DHCP-Server (22) und dem primären DNS-Server (24) nach Vergabe einer Netzwerkadresse an ein neu hinzukommendes Feldgerät (10,12) eine Anfrage an das neu hinzukommende Feldgerät (10,12) sendet und bei dessen sekundärem DNS-Server (24) dessen Teilnehmernamen abfragt und in die eigene DNS-Liste einträgt.

8. Verfahren nach Anspruch 7, wobei bei einer Anfrage eines Teilnehmernamens bei einem hinzukommenden Feldgerät (10,12) diese Anfrage immer zuerst von dessen sekundärem DNS-Server (24) beantwortet wird.

9. Verfahren nach einem der Ansprüche 5 oder 6, wobei das Feldgerät (10,12) mit aktiviertem DHCP-Server (22) und aktiviertem DNS-Server (24) das Programmiergerät (16) an einem Fehlschlag einer Abfrage einer Kennung bei dem Programmiergerät (16) erkennt.

10. Automatisierungstechnisches Feldgerät (10,12), das in einem technischen Prozess benachbart zu gesteuerten und/oder überwachten Aggregaten angeordnet ist und zur Steuerung, Regelung und/oder Überwachung des technischen Prozesses eingesetzt wird, mit Mitteln (34,22,24), nämlich einem Speicher, in den ein Computerprogramm (34) geladen oder ladbar ist, sowie einer Verarbeitungseinheit zur Ausführung des Computerprogramms (34) und zumindest einem DHCP-Server (22) oder einem DHCP-Server (22) sowie einem DNS-Server (24), wobei das Computerprogramm (34) Computerprogrammanweisungen zur Ausführung aller Verfahrensschritte nach einem der vorangehenden Ansprüche umfasst, wenn das Computerprogramm (34) durch die Verarbeitungseinheit ausgeführt wird.

## Claims

1. Method for establishing a communicative link between a programming device (16) and an automation technology field device (10, 12), which, in a technical process, is arranged adjacent to controlled and/or monitored assemblies and is used to control, regulate and/or monitor the technical process, **characterised in that**
the field device (10,12) includes an activatable DHCP server (22),
the programming device (16) is configured to automatically obtain a network address from a DHCP server (22), and
the programming device (16), upon connection to a field device (10, 12) with an activatable DHCP server (22) or to a network with at least one field device (10, 12) with an activatable DHCP server (22), obtains a network address from the DHCP server (22).

2. Method according to claim 1, wherein the field device (10, 12) includes a DNS server (24).

3. Method according to one of the preceding claims, wherein with a plurality of communicatively linked field devices (10, 12), only in one field device (10, 12) is its DHCP server activated and in all other field devices their DHCP servers are deactivated.

4. Method according to one of the preceding claims, wherein a communication network (20) exists at least in the form of a link between the programming device (16) and the field device (10, 12),
wherein prior to activating its DHCP server, the field device (10, 12) sends a DHCP request into the communication network and requests a network address, wherein the field device (10, 12), upon receipt of a response to the DHCP request, assumes a network address contained in the response as its own network address and deactivates its DHCP server (22),
wherein the field device (10, 12) assigns itself a network address and activates its DHCP server (22) if there is no response to the DHCP request within a predetermined time span, and
wherein the programming device (16) obtains a network address from precisely one DHCP server (22) active in the communication network (20).

5. Method according to claim 2 and claim 4, wherein in conjunction with the activation of the DHCP server (22), the respective field device (10, 12) also activates its DNS server (24) and enters a unique identifier as its own client name into a DNS list which can be used for the DNS server (24).

6. Method according to claim 5, wherein the field device (10, 12) with an activated DHCP server (22) and activated DNS server (24) requests a unique identifier from the field devices (10, 12) added to the communication network (20) and enters this into the DNS list as a client name of the added field device (10, 12).

7. Method according to claim 2 and 4,
wherein a DNS server (24) is active in the or each field device (10, 12) in the communication network (20),
wherein the DNS server (24) of the field device (10, 12) with the activated DHCP server (22) functions as a primary DNS server (24) and each other DNS server (24) functions as a secondary DNS server (24),
wherein each secondary DNS server (24) manages at least the client name of the respective field device (10, 12) in its own DNS list,
wherein the field device (10, 12) with the active DHCP server (22) and the primary DNS server (24) sends a request to the newly added field device (10, 12) after assigning a network address to a newly added field device (10, 12) and, with the latter's secondary DNS server (24), requests its client names and enters the same into its own DNS list.

8. Method according to claim 7, wherein, upon a request for a client name from an added field device (10, 12), this request is always initially answered by its secondary DNS server (24).

9. Method according to one of claims 5 or 6, wherein the field device (10, 12) with the activated DHCP server (22) and activated DNS server (24) identifies the programming device (16) upon failure of a request for an identifier from the programming device (16).

10. Automation technology field device (10, 12) which, in a technical process, is arranged adjacent to controlled and/or monitored assemblies and is used to control, regulate and/or monitor the technical process, having means (34, 22, 24), namely a memory, into which a computer program (34) is or can be loaded, as well as a processing unit for executing the computer program (34) and at least one DHCP server (22) or one DHCP server (22) and one DNS server (24), wherein the computer program (34) includes computer program instructions for executing all method steps according to one of the preceding claims, if the computer program (34) is run by the processing unit.

## Revendications

1. Procédé pour ménager une liaison de communication d'un appareil ( 16 ) de programmation avec un appareil ( 10, 12 ) de terrain en technique d'automatisation, qui est disposé dans un processus technique voisin de groupes à commander et/ou à contrôler et qui est utilisé pour la commande à régulation et/ou le contrôle du processus technique,
**caractérisé**
**en ce que** l'appareil ( 10, 12 ) de terrain comprend un serveur ( 22 ) DHCP activable,
**en ce que** l'appareil ( 16 ) de programmation est configuré pour un renvoi automatique à une adresse de réseau auprès d'un serveur ( 22 ) DHCP et
**en ce que** l'appareil ( 16 ) de programmation fournit une adresse de réseau auprès du serveur ( 22 ) DHCP lors d'une connexion à un appareil ( 10, 12 ) de terrain ayant un serveur ( 22 ) DHCP activable ou à un réseau ayant au moins un appareil ( 10, 12 ) de terrain ayant un serveur ( 22 ) DHCP activable.

2. Procédé suivant la revendication 1, dans lequel l'appareil ( 10, 12 ) de terrain comprend un serveur ( 24 ) DNS.

3. Procédé suivant l'une des revendications précédentes, dans lequel, s'il y a une multiplicité d'appareils ( 10, 12 ) de terrain reliés en communication, seulement dans un appareil ( 10, 12 ) de terrain son serveur DHCP est activé et dans tous les autres appareils de terrain leurs serveurs DHCP sont désactivés.

4. Procédé suivant l'une des revendications précédentes, dans lequel un réseau ( 20 ) de communication est constitué au moins sous la forme d'une connexion de l'appareil ( 16 ) de programmation à l'appareil ( 10, 12 ) de terrain,
dans lequel l'appareil ( 10, 12 ) de terrain envoie, avant une activation de son serveur DHCP, une demande DHCP au réseau de communication et exige une adresse de réseau,
dans lequel l'appareil ( 10, 12 ) de terrain prend en charge, après avoir reçu une réponse à la demande de DHCP, une adresse de réseau contenue dans la réponse comme adresse propre de réseau et laisse désactiver son serveur ( 22 ) DHCP,
dans lequel l'appareil ( 10, 12 ) de terrain, si, dans un laps de temps donné à l'avance, une réponse à la demande de DHCP n'est pas parvenue, s'attribue soi-même une adresse de réseau, ainsi qu'active son serveur ( 22 ) DHCP et
dans lequel l'appareil ( 16 ) de programmation fournit une adresse de réseau d'exactement un serveur ( 22 ) DHCP actif dans le réseau ( 20 ) de communication.

5. Procédé suivant la revendication 2 et la revendication 4, dans lequel, en liaison avec l'activation du serveur ( 22 ) DHCP, l'appareil ( 10, 12 ) de terrain active aussi son serveur ( 24 ) DNS, ainsi qu'entre une caractérisation univoque comme nom propre d'un participant dans une liste DNS utilisable pour le serveur ( 24 ) DNS.

6. Procédé suivant la revendication 5, dans lequel l'appareil ( 10, 12 ) de terrain ayant un serveur ( 22 ) DHCP activé et un serveur ( 24 ) DNS activé demande, pour des appareils ( 10, 12 ) de terrain arrivant au réseau ( 20 ) de communication, leur caractérisation univoque et entre celle-ci comme nom de participant de l'appareil ( 10, 12 ) de terrain arrivant dans la liste DNS.

7. Procédé suivant la revendication 2 et la revendication 4, dans lequel, dans le ou dans chaque appareil ( 10, 12 ) de terrain du réseau ( 20 ) de communication, un serveur ( 24 ) DNS est actif,
dans lequel le serveur ( 24 ) DNS de l'appareil ( 10, 12 ) de terrain ayant un serveur ( 22 ) DHCP activé sert de serveur ( 24 ) DNS primaire et chaque autre serveur ( 24 ) DNS de serveur ( 24 ) DNS secondaire,
dans lequel chaque serveur ( 24 ) DNS secondaire gère, dans sa propre liste DNS, au moins le nom de participant de l'appareil ( 10, 12 ) de terrain respectif,
dans lequel l'appareil ( 10, 12 ) de terrain ayant le serveur ( 22 ) DHCP actif et le serveur ( 24 ) DNS primaire envoie, après affectation d'une adresse de réseau à un appareil ( 10, 12 ) de terrain arrivant nouvellement, une demande à l'appareil ( 10, 12 ) de terrain arrivant nouvellement et demande, à son serveur ( 24 ) DNS secondaire, son nom de participant et l'entre dans sa propre liste DNS.

8. Procédé suivant la revendication 7, dans lequel, lors d'une demande d'un nom de participant pour un appareil ( 10, 12 ) de terrain arrivant, il est répondu à cette demande toujours en premier par son serveur ( 24 ) DNS secondaire.

9. Procédé suivant l'une des revendications 5 ou 6, dans lequel l'appareil ( 10, 12 ) de terrain ayant un serveur ( 22 ) DHCP activé et un serveur ( 24 ) DNS activé reconnaît l'appareil ( 26 ) de programmation sur un raté d'une demande d'une reconnaissance chez l'appareil ( 16 ) de programmation.

10. Appareil ( 10, 12 ) de terrain en technique d'automatisation, qui est disposé dans un processus technique au voisinage de groupes à commander et/ou à contrôler et qui est mis en oeuvre pour la commande, la régulation et/ou le contrôle du processus technique, comprenant des moyens ( 34, 22, 24 ), à savoir une mémoire, dans laquelle un programme ( 34 ) informatique est chargé ou peut l'être, ainsi qu'une unité de traitement pour exécuter le programme ( 34 ) informatique et au moins un serveur ( 22 ) DHCP ou un serveur ( 22 ) DHCP, ainsi qu'un serveur ( 24 ) DNS, le programme ( 34 ) informatique comprenant des instructions de programme informatique pour exécuter tous les stades d'un procédé suivant l'une des revendications précédentes, lorsque le programme ( 34 ) informatique est exécuté par l'unité de traitement.
